# EUROPÄISCHE PATENTSCHRIFT

(11) **EP 3 034 441 B1**
(45) Veröffentlichungstag und Bekanntmachung des Hinweises auf die Patenterteilung: **19.04.2017**
(21) Anmeldenummer: 14198627.3
(22) Anmeldetag: 17.12.2014
(51) Int. Cl.: B65G 54/02

(54) **Transportvorrichtung zum Fördern von Produkten**
Transport device for transporting products
Dispositif de transport de produits

(43) Veröffentlichungstag der Anmeldung: 22.06.2016
(73) Patentinhaber: UHLMANN PAC-SYSTEME GmbH & Co. KG, 88471 Laupheim (DE)
(72) Erfinder: Aumann, Thomas, 88451 Dettingen (DE); Zieher, Daniel, 88444 Ummendorf (DE); Fochler, Fritz, 89358 Kammeltal-Behlingen (DE)
(74) Vertreter: Wächter, Jochen

(56) Entgegenhaltungen:
- EP-A1- 2 088 664
- DE-A1- 4 137 246
- DE-A1-102012 210 329
- JP-A- 2001 057 712
- US-A- 5 351 811

## Beschreibung

Die vorliegende Erfindung betrifft eine Transportvorrichtung zum Fördern von Produkten nach dem Oberbegriff des Anspruchs 1.

Zum Fördern von Produkten ist beispielsweise eine Transportvorrichtung bekannt, bei der mehrere Schlitten entlang einer Laufschiene unabhängig voneinander bewegt werden. Dies wird realisiert, indem die Laufschiene eine Linearmotor-Antriebsvorrichtung zum Antrieb der Schlitten aufweist, wobei jeder Schlitten mindestens einen Permanentmagneten aufweist, der mit der Linearmotor-Antriebsvorrichtung in Wirkverbindung steht. Eine derartige Transportvorrichtung mit Linearmotorantrieb ist aus WO 2013/156177 A1 bekannt.

Die DE 10 2012 210 329 A1 offenbart eine Transportvorrichtung nach dem Oberbegriff des Anspruchs 1, die eine Laufschiene und mehrere entlang der Laufschiene einzeln bewegbare Schlitten verwendet. Die Schlitten weisen in Förderrichtung senkrecht abstehende Halteelemente auf. Zum Transportieren jeweils eines Produktes ist ein Paar von Schlitten bereitgestellt, wobei der hintere Schlitten als schiebender Schlitten und der vordere Schlitten als der haltende Schlitten fungiert. Die Bewegung der Schlitten wird so gesteuert, dass das Produkt zwischen den Halteelementen der Schlitten gehalten ist. Sofern der Transport entlang einer geraden Laufschiene erfolgt, treten keine Probleme auf. Sollen jedoch die Produkte entlang einer Laufbahn veränderlicher Förderrichtung bewegt werden, verschieben sich die Halteelemente relativ zueinander. Dies hat zur Folge, dass das Produkt nicht mehr zuverlässig gehalten ist.

Aus JP 2001 057712 A ist schließlich eine Transportvorrichtung für Gepäckstücke bekannt, die zwei Schlitten aufweist, die entlang einer Laufschiene bewegbar und mittels eines Linearmotors angetrieben sind. Die Schlitten sind wiederum durch ein plattenförmiges Trägerelement, welches als Auflage für die Gepäckstücke fungiert, miteinander verbunden. Dabei sind die Schlitten jeweils drehbar um eine Drehachse senkrecht zur Förderrichtung der Schlitten mit dem plattenförmigen Trägerelement verbunden.

Der vorliegenden Erfindung liegt die Aufgabe zugrunde, eine Transportvorrichtung zum Fördern von Produkten zu schaffen, mit der die Produkte unabhängig voneinander an Laufbahnen veränderlicher Förderrichtung zuverlässig transportiert werden können.

Diese Aufgabe wird durch die Merkmale des Anspruchs 1 gelöst.

Erfindungsgemäß umfasst die Transportvorrichtung von Produkten mindestens ein Paar bewegbarer Schlitten, das einen ersten Schlitten und einen zweiten Schlitten zum Fördern mindestens eines Produktes aufweist, sowie eine umlaufend angeordnete Laufschiene zur Führung des mindestens einen Paares von Schlitten hintereinander in einer veränderlichen Förderrichtung. Eine Linearmotor-Antriebsvorrichtung ist zum Antrieb des mindestens einen Paares von Schlitten vorgesehen, wobei zumindest der erste Schlitten mindestens einen Permanentmagneten aufweist, der mit der Linearmotor-Antriebsvorrichtung in Wirkverbindung steht. An dem ersten und dem zweiten Schlitten ist jeweils ein Halteelement vorgesehen und die Halteelemente des ersten und zweiten Schlittens bilden zwischen sich einen Produktaufnahmeraum. Jedes Halteelement am ersten und zweiten Schlitten ist weiterhin jeweils um eine Drehachse, die sich im Wesentlichen senkrecht zur veränderlichen Förderrichtung erstreckt, drehbar gelagert, und mindestens ein Verbindungselement zum Verbinden der Halteelemente des ersten und zweiten Schlittens ist derart vorgesehen, dass eine relative Orientierung der Halteelemente zueinander festgelegt ist.

Durch die Verdrehbarkeit der Halteelemente relativ zu den Schlitten bei gleichzeitiger Beibehaltung der Orientierung der Halteelemente zueinander wird ermöglicht, dass die Schlitten verschiedene Orientierungen zueinander einnehmen können. Somit bleibt der Haltezustand des Produktes auch in Kurvenbereichen der Laufschiene unverändert.

Sind die Halteelemente weiterhin senkrecht zu dem mindestens einen Verbindungselement angeordnet, resultieren an den Halteelementen in vorteilhafter Weise entsprechende parallele Halteflächen, zwischen denen ein Produkt zuverlässig gehalten ist.

Wenn das Paar von Schlitten entlang eines Laufschienenabschnitts veränderlicher Förderrichtung geführt wird, drehen sich die Halteelemente relativ zum ersten und zweiten Schlitten.

Vorzugsweise ist das mindestens eine Verbindungselement in Form einer Verbindungsstange ausgebildet. Die Verbindungsstange betrifft eine Ausgestaltung, die einfach und kostengünstig herstellbar ist.

Es ist vorteilhaft, wenn mindestens eines der Halteelemente eine Durchgangsöffnung aufweist, durch die sich die Verbindungsstange erstreckt. Hierdurch wird zwischen dem mindestens einen Halteelement und der Verbindungsstange eine Linearführung realisiert, die den Vorgang des Positionierens des Halteelements relativ zum anderen Halteelement entlang der Verbindungsstange erleichtert.

Nach einer weiteren Ausgestaltung verhindert das in der Durchgangsöffnung aufgenommene mindestens eine Verbindungselement durch Formschluss eine Verkippung des Halteelements relativ zum mindestens einen Verbindungselement. Diese Anordnung verhindert somit zwar ein Verkippen des Halteelements, lässt aber eine lineare Verschiebung des Halteelements entlang der Verbindungsstange zu.

Mit Vorteil sind die Halteelemente an den einander zugewandten Seiten des ersten und zweiten Schlittens angeordnet. Dadurch ist es möglich, die an den Schlitten angeordneten Halteelemente zum Halten schmaler Produkte möglichst nahe aneinander heranzuführen. Dies ist von besonderem Vorteil beim Durchlaufen gekrümmter Laufschienenabschnitte.

In weiterer Ausgestaltung kann das Halteelement des ersten Schlittens an dem Verbindungselement starr befestigt sein, während das Verbindungselement weiterhin als eine Führungseinrichtung fungiert, an der das Halteelement des zweiten Schlittens gleitbeweglich gelagert ist. Der Abstand zwischen den Halteelementen kann somit stufenlos eingestellt werden. Damit können in vorteilhafter Weise Produkte mit unterschiedlichen Abmessungen bzw. Breiten durch dasselbe Paar von Schlitten gefördert werden. Vordefinierte Formatteile oder manuelle Einstellungen an der Transportvorrichtung sind daher beim Transport der Produkte nicht erforderlich.

Für den Fall, dass die Halteelemente des ersten und zweiten Schlittens an dem Verbindungselement starr, gegebenenfalls aber lösbar, befestigt sind, ergibt sich eine Anordnung von Halteelementen mit einem festen, unveränderlichen Abstand. Darüber hinaus werden über das Verbindungselement die Halteelemente starr miteinander verbunden. In vorteilhafterweise reicht es daher aus, wenn nur einer der beiden Schlitten aktiv angetrieben ist. Die Permanentmagnete des zweiten Schlittens werden in diesem Fall in der Regel nur zur Vorspannung seiner Laufrollen an die Laufschiene verwendet. Unter Umständen kann auf die Permanentmagnete in dem zweiten Schlitten komplett verzichtet werden.

Weiterhin sind vorzugsweise der erste und zweite Schlitten aktiv angetrieben, wobei die Steuerung des Antriebs des ersten und zweiten Schlittens derart eingestellt ist, dass der Abstand zwischen den Halteelementen konstant bleibt.

Bei einer möglichen Ausgestaltung definiert die umlaufend angeordnete Laufschiene eine Laufschienenebene und die Halteelemente sind senkrecht zur Laufschienenebene angeordnet.

Bei einer Alternative definiert die umlaufend angeordnete Laufschiene eine Laufschienenebene und die Halteelemente sind parallel zur Laufschienenebene angeordnet.

Kurze Beschreibung der Figuren
- Fig. 1: ist eine Seitenansicht eines Abschnitts einer ersten Ausführungsform der erfindungsgemäßen Transportvorrichtung, die ein breites Produkt transportiert;
- Fig. 2: ist eine Seitenansicht eines Abschnitts der ersten Ausführungsform der erfindungsgemäßen Transportvorrichtung, die ein schmales Produkt transportiert;
- Fig. 3: ist eine weitere Seitenansicht eines Abschnitts der ersten Ausführungsform der erfindungsgemäßen Transportvorrichtung, bei der ein Schlittenpaar an einem geraden und ein Schlittenpaar an einem gekrümmten Laufschienenabschnitt gezeigt ist;
- Fig. 4: ist eine vergrößerte perspektivische Ansicht des Schlittenpaares in dem gekrümmten Laufschienenabschnitt in Fig. 3;
- Fig. 5: ist eine perspektivische Ansicht eines Abschnitts einer zweiten Ausführungsform der erfindungsgemäßen Transportvorrichtung; und
- Fig. 6: ist eine vergrößerte perspektivische Ansicht des Schlittenpaares in dem gekrümmten Laufschienenabschnitt in Fig. 5.

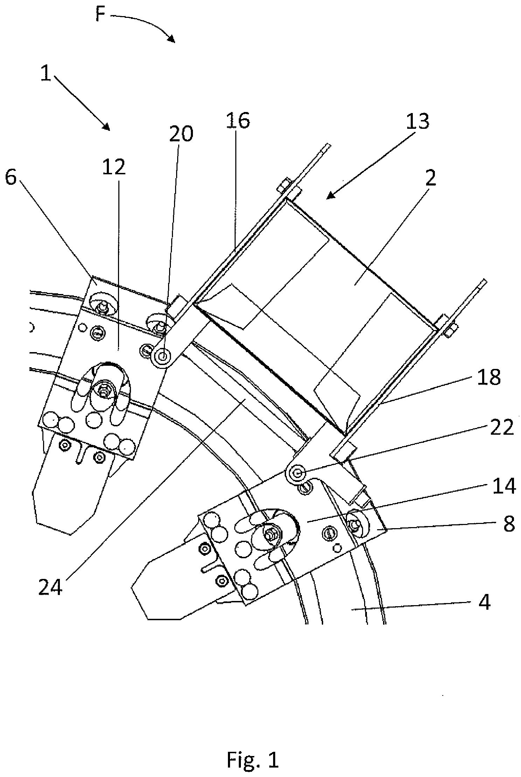

Fig. 1 zeigt den Aufbau einer ersten Ausführungsform der erfindungsgemäßen Transportvorrichtung 1 zum Fördern von Produkten 2, insbesondere Faltschachteln, in einer Seitenansicht. Die Transportvorrichtung 1 umfasst eine ortsfest umlaufend angeordnete Laufschiene 4 zur Führung mindestens eines Paares von bewegbaren Schlitten, einem ersten Schlitten 6 und einem zweiten Schlitten 8, in einer veränderlichen Förderrichtung F. Die Förderrichtung F kann auch entgegengesetzt sein. Die Schlitten dienen zum Fördern der Produkte 2 und werden entlang der Laufschiene 4 bewegt. Auch wenn in Fig. 1 lediglich ein Paar von Schlitten 6, 8 dargestellt ist, werden in der Regel mehrere Paare von Schlitten 6, 8 gleichzeitig auf derselben Laufschiene 4 verfahren. Innerhalb des Paares kann sowohl der erste Schlitten 6 als auch der zweite Schlitten 8 in Förderrichtung F vorangestellt sein.

Weiterhin zeigt Fig. 1 lediglich einen Teil, und zwar einen gekrümmten Abschnitt, der umlaufenden Laufschiene 4. Der erste und zweite Schlitten 6, 8 bewegen sich an der Außenseite der Laufschiene 4, im Uhrzeigersinn oder im Gegenuhrzeigersinn, einmal um die gesamte Laufschiene 4 herum, bis sie wieder die Ausgangsposition erreichen. Die Schlitten 6, 8 können an geeigneter Stelle mit Produkten 2 befüllt werden und die Produkte 2 können an geeigneter Stelle auch wieder von den Schlitten 6, 8 entnommen werden.

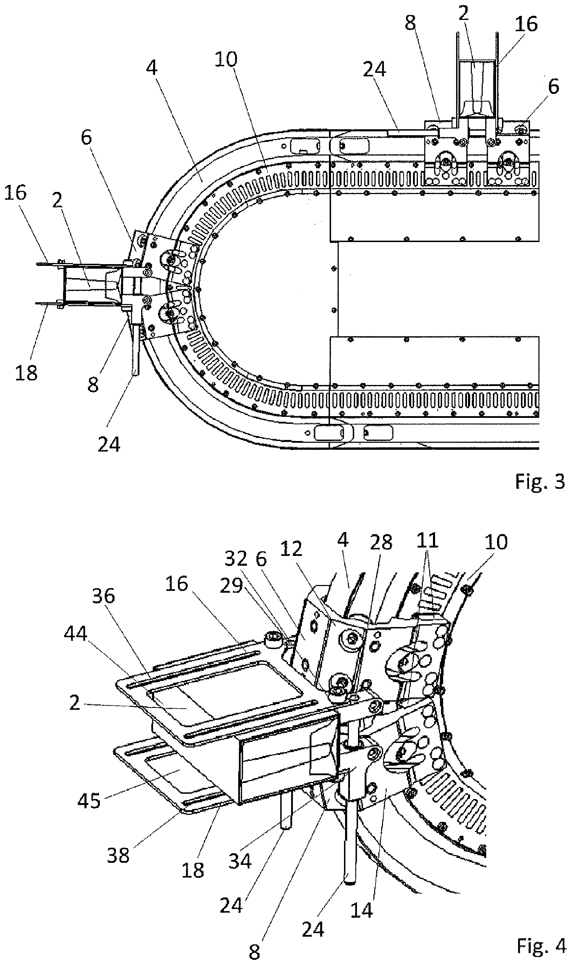

Zum Antrieb der Schlitten 6, 8 dient eine Linearmotor-Antriebsvorrichtung 10, die in Fig. 3 und 4 gezeigt ist. Die Linearmotor-Antriebsvorrichtung 10 ist innerhalb der von der Laufschiene 4 definierten ovalen Form angeordnet und weist eine ebensolche ovale Form auf. Weiterhin umfasst die Linearmotor-Antriebsvorrichtung 10 eine Mehrzahl von aneinandergereihten Spulen (nicht gezeigt), die einzeln bestromt werden können. Zumindest einer der Schlitten 6, 8 weist wenigstens einen, vorzugsweise zwei Permanentmagnete 11 (siehe Fig. 4) auf, die mit der Linearmotor-Antriebsvorrichtung 10 in Wirkverbindung stehen.

Wie in Fig. 4 angedeutet, weist jeder Schlitten 6, 8 einen im Wesentlichen hufeisenförmigen oder umgekehrt U-förmigen Grundkörper 12, 14 auf. Die Lagerung und Führung der Grundkörper 12, 14 entlang der Laufschiene 4 erfolgt über eine Mehrzahl von (nicht gezeigten) Laufrollen. Für die konstruktive Ausgestaltung der Schlitten 6, 8 und deren Lagerung auf der Laufschiene 4 existiert eine große Anzahl von Möglichkeiten.

Wieder Bezug nehmend auf Fig. 1, ist an dem ersten und dem zweiten Schlitten 6, 8, insbesondere an den Grundkörpern 12, 14, jeweils mindestens ein Halteelement 16, 18 angeordnet. Die Halteelemente 16, 18 bilden zwischen sich somit einen Produktaufnahmeraum 13 und halten das mindestens eine Produkt 2 dort zwischen sich fest. Vorzugsweise erstrecken sich die Halteelemente 16, 18 symmetrisch, insbesondere parallel, zueinander und ragen von den Schlitten 6, 8 auf der von der Laufschiene 4 abgewandten Seite, also nach außen, ab.

Jedes der Halteelemente 16, 18 ist an dem zugeordneten Schlitten 6, 8 drehbar um eine jeweilige Drehachse 20, 22 gelagert, die in Richtung senkrecht zur Förderrichtung F bzw. senkrecht zur Ebene E, die durch die Laufschiene 4 definiert wird, verlaufen. Zwischen den beiden Halteelementen 16, 18 erstreckt sich mindestens ein Verbindungselement 24, das im dargestellten Beispielsfall in Form einer Verbindungsstange ausgebildet ist. Durch das mindestens eine Verbindungselement 24 wird die Orientierung der Halteelemente 16, 18 zueinander festgelegt, unabhängig vom Bahnverlauf der Laufschiene 4. In der Regel sind zwei Verbindungselemente 24 symmetrisch an den Schlitten 6, 8 angeordnet.

Um die Orientierung der Halteelemente 16, 18 zueinander festzulegen, ist in den Halteelementen 16, 18 jeweils mindestens eine Durchgangsöffnung 28, 30 ausgebildet, in der das mindestens eine Verbindungselement 24 formschlüssig aufgenommen ist. Vorliegend weist sowohl jedes Verbindungselement 24 als auch jede der Durchgangsöffnungen 28, 30 einen kreisförmigen Querschnitt auf. Es sind aber viele andere Querschnittsformen möglich.

Die Durchgangsöffnungen 28, 30 verlaufen jeweils senkrecht zur Ebene, in der die Halteelemente 16, 18 angeordnet sind, und somit auch parallel zu einer Ebene, die durch die umlaufende Laufschiene 4 definiert ist. Ein Formschluss zwischen dem jeweiligen Verbindungselement 24 und den Durchgangsöffnungen 28, 30 in den Halteelementen 16, 18 resultiert daraus, dass ein umlaufender Außenumfangsabschnitt des Verbindungselements 24 an den Innenumfangsabschnitten der Durchgangsöffnungen 28, 30 derart anliegt, dass eine Kippbewegung der Halteelemente 16, 18 relativ zum Verbindungselement 24 verhindert wird.

Weiterhin kann zumindest eines der Halteelemente 16, 18 in Längsrichtung des Verbindungselements 24 gleitbeweglich gelagert sein. In diesem Fall fungiert das Verbindungselement 24 als eine Längsführungseinrichtung zum gleitbeweglichen Verschieben des mindestens einen Halteelements 16, 18 in Längsrichtung, um den Abstand zwischen den Halteelementen 16, 18 einzustellen. Zum Fixieren eines bestimmten Abstands kann an einem der Halteelemente 16, 18 eine Arretiervorrichtung, beispielsweise in Form einer Feststellschraube, vorgesehen sein.

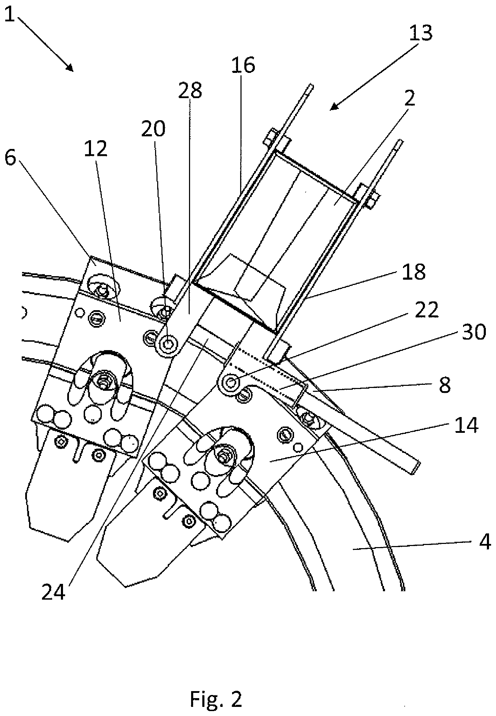

Während in Fig. 1 ein breites Produkt 2 mit der Transportvorrichtung 1 transportiert wird, zeigt Fig. 2 dieselbe Anordnung lediglich mit dem Unterschied, dass die Halteelemente 16, 18 in einem geringeren Abstand zueinander angeordnet sind und ein schmales Produkt 2 transportiert wird. Im Übrigen sind die Fig. 1 und 2 identisch, wobei gleiche Bezugszeichen gleiche Teile bezeichnen, so dass auf eine erneute Beschreibung der identischen Teile verzichtet wird.

Gegenüber der Anordnung in Fig. 1 ist der Abstand zwischen den beiden Schlitten 6, 8 verringert, indem die Schlitten 6, 8 aufeinander zu bewegt wurden. Das Halteelement 16 des ersten Schlittens 6 ist mit dem Verbindungselement 24, wie in Fig. 1, starr verbunden und der zweite Schlitten 8 mit dem zweiten Halteelement 18 ist entlang dem Verbindungselement 24 in Richtung auf den ersten Schlitten 6 verschoben, so dass ein geringerer Abstand zwischen den Halteelementen 16, 18 für ein schmales Produkt 2 eingestellt ist.

Weiterhin sind in Fig. 2 die beiden Schlitten 6, 8 in einem minimalen Abstand voneinander angeordnet, bei dem eine Berührung der Schlitten 6, 8 bei Bewegung entlang des gekrümmten Laufbahnabschnitts gerade noch nicht erfolgt. Zur Erreichung eines minimalen Abstands zwischen den Halteelementen 16, 18, um schmale Produkte 2 aufnehmen zu können, sind die Halteelemente 16, 18 an den einander zugewandten Seiten des ersten und des zweiten Schlittens 6, 8 angeordnet.

In Fig. 3 sind insgesamt zwei Paare von Schlitten mit jeweils einem ersten und zweiten Schlitten 6, 8 an der Laufschiene 4 angeordnet. Der gezeigte Abschnitt der Laufschiene 4 betrifft die linke Hälfte einer insgesamt ovalen Laufschienenanordnung. Die zwei Paare von Schlitten 6, 8 sind in dem oberen geradlinigen Abschnitt der ovalen Laufschiene 4 und in einem gekrümmten Kurvenabschnitt dargestellt. Jedes Paar von Schlitten 6, 8 wird demnach abschnittsweise eine geradlinige Bewegung und abschnittsweise eine Kurvenbewegung ausführen.

In einem Vergleich der beiden Paare von Schlitten in Fig. 3 sind die Schlitten 6, 8 des Paars, das sich im geraden Abschnitt der Laufschiene 4 befindet, parallel zueinander angeordnet. Demgegenüber sind die Schlitten 6, 8 des Paares, das sich im gekrümmten Abschnitt der Laufschiene 4 befindet, zueinander geneigt angeordnet. In beiden Fällen sind die Halteelemente 16, 18 parallel zueinander und senkrecht zum Verbindungselement 24 angeordnet, wobei das Produkt 2 zwischen den Halteelementen 16, 18 gehalten ist.

Fig. 4 zeigt eine vergrößerte Ansicht des einen in Fig. 3 gezeigten Paares von Schlitten 6, 8 in perspektivischer Darstellung. Die Halteelemente 16, 18 bestehen jeweils aus einem Basisteil 32, 34 und einem Halteteil 36, 38. Wie gezeigt, sind die Halteteile 36, 38 als Haltebügel ausgebildet, sind vorzugsweise plattenförmig und mit einer Öffnung 44, 45 ausgestattet. Weiterhin sind die Halteelemente 16, 18 an den Seiten, die den Schlitten 6, 8 zugewandt sind, mit einer U-förmigen Ausnehmung versehen. In der U-förmigen Ausnehmung sind jeweils wiederum die Verbindungsabschnitte, welche die beiden Schenkel der U-förmigen Grundkörper 12, 14 der Schlitten 6, 8 verbinden, angeordnet. Vorzugsweise sind die Halteelemente 16, 18 auf zwei gegenüberliegenden Seiten der Grundkörper 12, 14 drehbar gelagert.

Die Basisteile 32, 34 sind jeweils an den einander zugewandten Seiten der Halteteile 36, 38 angeordnet und kürzer als die Halteteile 36, 38 ausgebildet. Damit bilden die Basisteile 32, 34 jeweils eine partielle Auflagefläche für die zwischen den Halteteilen 36, 38 aufgenommenen Produkte 2. Größe und Form der Halteteile 36, 38 und Basisteile 32, 34 können natürlich variieren.

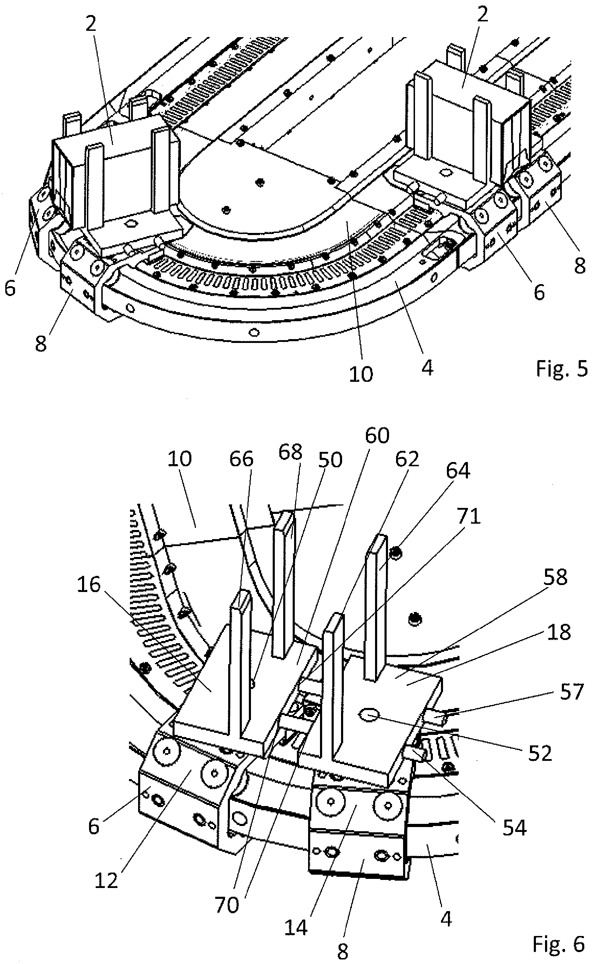

Fig. 5 und 6 zeigen den Aufbau einer zweiten Ausführungsform der erfindungsgemäßen Transportvorrichtung 1 zum Fördern von Produkten 2, insbesondere Faltschachteln, jeweils in einer perspektivischen Ansicht. Wesentliche Teile der Ausführungsform aus Fig. 5 und 6 sind identisch zu der Ausführungsform aus Fig. 1 bis 4, wobei gleiche Bezugszeichen gleiche Teile bezeichnen, so dass auf eine erneute Beschreibung der identischen Teile verzichtet wird.

Im Unterschied zu den Fig. 1 bis 4, bei der die Laufschiene 4 in einer vertikalen Ebene angeordnet war, zeigen die Fig. 5 und 6 eine Transportvorrichtung 1, bei der die Laufschiene 4 in einer horizontalen Ebene E angeordnet ist. Der in Fig. 5 gezeigte Ausschnitt der Laufschiene 4 ist ein Teil einer insgesamt ovalen Laufschienenanordnung mit zwei geraden Laufschienenabschnitten und zwei gekrümmten Laufschienenabschnitten.

An dem ersten und dem zweiten Schlitten 6, 8, insbesondere an den Grundkörpern 12, 14 der Schlitten 6, 8, ist wiederum jeweils ein Halteelement 16, 18 vorgesehen. Die Halteelemente 16, 18 erstrecken sich im Wesentlichen parallel zueinander, senkrecht zur Förderrichtung F der Schlitten 6, 8 sowie senkrecht zu einer horizontalen Ebene, die durch die umlaufende Laufschiene 4 definiert ist. Beide Halteelemente 16, 18 sind an ihren zugeordneten Schlitten 6, 8 drehbar um eine jeweilige Drehachse 50, 52 gelagert. Die Drehachsen 50, 52 verlaufen in Richtung senkrecht zur Förderrichtung F bzw. senkrecht zur Ebene, die durch die Laufschiene 4 definiert wird. Zusätzlich ist zwischen den beiden Halteelementen 16, 18 mindestens ein Verbindungselement 54, vorzugsweise in Form einer Verbindungsstange, angeordnet. Durch das mindestens eine Verbindungselement 54 ist die Orientierung der Halteelemente 16, 18 zueinander festgelegt.

Jedes Halteelement 16, 18 besteht hier aus einer Grundplatte 58, 60 und zwei von der Grundplatte 58, 60 senkrecht abstehenden Halteplatten 62, 64, 66, 68. Die Halteplatten 62, 64, 66, 68 sind jeweils durch die Grundplatte 58, 60 an dem ersten bzw. zweiten Schlitten 6, 8 drehbar gelagert.

Zum Halten eines Produktes 2 ist es wesentlich, dass die Halteflächen der Halteelemente 16, 18 in der Orientierung zueinander festgelegt sind. Um die parallele Ausrichtung der Halteflächen der Halteelemente 16, 18 festzulegen, sind in den Halteelementen, insbesondere in den Grundplatten 58, 60, zwei Durchgangsöffnungen 70, 71 ausgebildet, in der die Verbindungselemente 54 formschlüssig aufgenommen sind.

Die Durchgangsöffnungen 70, 71 verlaufen durch die Grundplatten 58, 60 senkrecht zu den Halteplatten 62, 64, 66, 68 und parallel zu einer Ebene, die durch die umlaufende Laufschiene 4 definiert wird. Ein Formschluss zwischen den Verbindungselementen 54 und den Durchgangsöffnungen 70, 71 verhindert, dass sich die Halteelemente 16, 18 relativ zueinander verdrehen und damit die Halteflächen der Halteplatten 62, 64, 66, 68 aus ihrer parallelen Orientierung zueinander bewegt werden. Wie bei der ersten Ausführungsform ist mindestens eines der Halteelemente 16, 18 in Längsrichtung der Verbindungselemente 54 gleitbeweglich gelagert. In diesem Fall fungieren die Verbindungselemente 54 als eine Längsführungseinrichtung zum gleitbeweglichen Verschieben des mindestens einen Halteelementes 16, 18 in Längsrichtung. Dadurch kann der Abstand zwischen den Halteelementen 16, 18, insbesondere den Halteplatten 62, 64, 66, 68 eingestellt werden.

Bei der erfindungsgemäßen Transportvorrichtung 1 sind verschiedene Betriebsarten denkbar. Bei einer ersten Betriebsart sind der erste und der zweite Schlitten 6, 8 aktiv angetrieben. In diesem Fall kann jedes Halteelement 16, 18 starr (vorzugsweise lösbar) mit dem mindestens einen Verbindungselement 24, 54 verbunden sein. Ebenso ist es denkbar, dass eines der Halteelemente 16, 18 starr (vorzugsweise lösbar) mit dem Verbindungselement 24, 54 verbunden ist, während das andere Haltelement 16, 18 gleitbeweglich mit dem Verbindungselement 24, 54 verbunden ist. Schließlich ist es auch denkbar, dass beide Halteelemente 16, 18 gleitbeweglich mit dem Verbindungselement 24, 54 verbunden sind. Die Einstellung des Abstandes zwischen den Halteelementen 16, 18 erfolgt in den beiden letzteren Fällen alleine durch die Steuerung des Antriebs des ersten und zweiten Schlittens 6, 8.

Bei einer anderen Betriebsart kann jedes Halteelement 16, 18 starr (vorzugsweise lösbar) mit dem mindestens einen Verbindungselement 24, 54 verbunden sein und nur einer der Schlitten 6, 8 ist aktiv angetrieben, während der nicht aktiv angetriebene Schlitten 6, 8 über das mindestens eine Verbindungselement 24, 54 mit dem aktiv angetriebenen Schlitten 6, 8 mitbewegt wird. In diesem Fall ist es vorteilhaft, wenn der mindestens eine Permanentmagnet 11 des nicht aktiv angetriebenen Schlittens 6, 8 zumindest für die Vorspannung der Laufrollen des Schlittens 6, 8 an die Laufschiene 4 sorgt.

Die Anordnung und Geometrie der Halteelemente 16, 18 kann je nach Anwendungsfall und Art und Größe der zu transportierenden Produkte 2 unterschiedlich sein. Beispielsweise können die Halteelemente 16, 18 nicht parallel, sondern unter einem vorbestimmten Winkel zueinander gehalten werden. Ebenso können die Halteflächen nicht nur gerade, sondern auch gerundete Abschnitte aufweisen.

## Patentansprüche

1. Transportvorrichtung (1) zum Fördern von Produkten (2), mit
mindestens einem Paar bewegbarer Schlitten (6, 8), das einen ersten Schlitten (6) und einen zweiten Schlitten (8) zum Fördern mindestens eines Produktes (2) aufweist,
einer umlaufend angeordneten Laufschiene (4) zur Führung des mindestens einen Paares von Schlitten (6, 8) hintereinander in einer veränderlichen Förderrichtung (F), einer Linearmotor-Antriebsvorrichtung (10) zum Antrieb des mindestens einen Paares von Schlitten (6, 8), wobei zumindest der erste Schlitten (6) mindestens einen Permanentmagneten (11) aufweist, der mit der Linearmotor-Antriebsvorrichtung (10) in Wirkverbindung steht,
wobei an dem ersten (6) und dem zweiten Schlitten (8) jeweils ein Halteelement (16, 18) vorgesehen ist und die Halteelemente (16, 18) des ersten (6) und zweiten Schlittens (8) zwischen sich einen Produktaufnahmeraum (13) bilden und das mindestens eine Produkt (2) dort zwischen sich festhalten,
**dadurch gekennzeichnet, dass**
die Halteelemente (16, 18) am ersten (6) und zweiten Schlitten (8) jeweils um eine Drehachse (20, 22; 50, 52), die sich im Wesentlichen senkrecht zur veränderlichen Förderrichtung (F) erstreckt, drehbar gelagert sind, und
mindestens ein Verbindungselement (24, 54) zum Verbinden der Halteelemente (16, 18) des ersten (6) und zweiten Schlittens (8) derart vorgesehen ist, dass eine relative Orientierung der Halteelemente (16, 18) zueinander festgelegt ist.

2. Transportvorrichtung (1) nach Anspruch 1, **dadurch gekennzeichnet, dass** die Halteelemente (16, 18) durch das mindestens eine Verbindungselement (24, 54) symmetrisch zueinander gehalten sind.

3. Transportvorrichtung (1) nach Anspruch 2, **dadurch gekennzeichnet, dass** die Halteelemente (16, 18) durch das mindestens eine Verbindungselement (24, 54) parallel zueinander gehalten sind.

4. Transportvorrichtung (1) nach Anspruch 3, **dadurch gekennzeichnet, dass** die Halteelemente (16, 18) senkrecht zu dem mindestens einen Verbindungselement (24, 54) angeordnet sind.

5. Transportvorrichtung (1) nach einem der vorhergehenden Ansprüche, **dadurch gekennzeichnet, dass** die Laufschiene (4) mindestens einen Abschnitt veränderlicher Förderrichtung (F) aufweist und das Fördern des mindestens einen Paares von Schlitten (6, 8) entlang des mindestens einen Abschnitts veränderlicher Förderrichtung (F) bewirkt, dass sich die Halteelemente (16, 18) relativ zum ersten (6) und zweiten Schlitten (8) drehen.

6. Transportvorrichtung (1) nach einem der vorhergehenden Ansprüche, **dadurch gekennzeichnet, dass** das mindestens eine Verbindungselement (24, 54) in Form einer Verbindungsstange ausgebildet ist.

7. Transportvorrichtung (1) nach Anspruch 6, **dadurch gekennzeichnet, dass** mindestens eines der Halteelemente (16, 18) eine Durchgangsöffnung (28, 29; 70, 71) aufweist, durch die sich das mindestens eine Verbindungselement (24, 54) erstreckt.

8. Transportvorrichtung (1) nach Anspruch 7, **dadurch gekennzeichnet, dass** das in der Durchgangsöffnung (28, 29; 70, 71) aufgenommene mindestens eine Verbindungselement (24, 54) durch Formschluss eine Verkippung des Halteelements (16, 18) relativ zum mindestens einen Verbindungselement (24, 54) verhindert.

9. Transportvorrichtung (1) nach einem der vorhergehenden Ansprüche, **dadurch gekennzeichnet, dass** die Halteelemente (16, 18) an den einander zugewandten Seiten des ersten (6) und zweiten Schlittens (8) angeordnet sind.

10. Transportvorrichtung (1) nach einem der vorhergehenden Ansprüche, **dadurch gekennzeichnet, dass** das Halteelement (16) des ersten Schlittens (6) an dem mindestens einen Verbindungselement (24, 54) starr befestigt ist und das mindestens eine Verbindungselement (24, 54) weiterhin als eine Führungseinrichtung fungiert, an der das Halteelement (18) des zweiten Schlittens (8) gleitbeweglich gelagert ist.

11. Transportvorrichtung (1) nach einem der Ansprüche 1 bis 9, **dadurch gekennzeichnet, dass** die Halteelemente (16, 18) des ersten (6) und zweiten Schlittens (8) an dem mindestens einen Verbindungselement (24, 54) starr befestigt sind.

12. Transportvorrichtung (1) nach Anspruch 10 oder 11, **dadurch gekennzeichnet, dass** die Halteelemente (16, 18) des ersten (6) und des zweiten Schlittens (8) an dem mindestens einen Verbindungselement (24, 54) lösbar befestigt sind.

13. Transportvorrichtung (1) nach einem der vorhergehenden Ansprüche, **dadurch gekennzeichnet, dass** der erste (6) und zweite Schlitten (8) aktiv angetrieben sind, wobei die Steuerung des Antriebs des ersten (6) und zweiten Schlittens (8) derart eingestellt ist, dass der Abstand zwischen den Halteelementen (16, 18) konstant bleibt.

14. Transportvorrichtung (1) nach einem der vorhergehenden Ansprüche, **dadurch gekennzeichnet, dass** die Laufschiene (4) eine Laufschienenebene (E) definiert und die Halteelemente (16, 18) senkrecht zur Laufschienenebene (E) angeordnet sind.

15. Transportvorrichtung (1) nach einem der Ansprüche 1 bis 13, **dadurch gekennzeichnet, dass** die Laufschiene (4) eine Laufschienenebene (E) definiert und die Halteelemente (16, 18) parallel zur Laufschienenebene (E) angeordnet sind.

## Claims

1. Transport device (1) for transporting products (2), with at least one pair of movable slide carriages (6, 8) which comprise a first slide carriage (6) and a second slide carriage (8) for moving at least one product (2),
a peripherally arranged track rail (4) for guiding the at least one pair of slide carriages (6, 8) in succession in a variable conveying direction (F),
a linear motor drive device (10) for driving the at least one pair of slide carriages (6, 8) wherein at least the first slide carriage (6) has at least one permanent magnet (11) which is in active connection with the linear motor drive device (10),
wherein a holding element (16, 18) is provided on each of the first (6) and the second slide carriages (8) and the holding elements (16, 18) of the first (6) and second slide carriage (8) form between them a product receiving room (13) and hold the at least one product (2) secure between them there,
**characterised in that**
the holding elements (16, 18) on the first (6) and second slide carriages (8) are each mounted to rotate about an axis of rotation (20, 22; 50, 52) which extends substantially perpendicular to the variable conveying direction (F), and
at least one connecting element (24, 54) is provided for connecting the holding elements (16, 18) of the first (6) and second slide carriage (8) such that a relative orientation of the holding elements (16, 18) to each other is fixed.

2. Transport device (1) according to claim 1 **characterised in that** the holding elements (16, 18) are held symmetrically relative to one another by the at least one connecting element (24, 54).

3. Transport device (1) according to claim 2, **characterised in that** the holding elements (16, 18) are held parallel to one another by the at least one connecting element (24, 54).

4. Transport device (1) according to claim 3 **characterised in that** the holding elements (16, 18) are arranged perpendicular to the at least one connecting element (24, 54).

5. Transport device (1) according to one of the preceding claims **characterised in that** the track rail (4) has at least one portion of variable conveying direction (F) and causes the conveyance of the at least one pair of slide carriages (6, 8) along the at least one portion of variable conveying direction (F) such that the holding elements (16, 18) turn relative to the first (6) and the second slide carriage (8).

6. Transport device (1) according to one of the preceding claims **characterised in that** the at least one connecting element (24, 54) is configured in the form of a connecting rod.

7. Transport device (1) according to claim 6 **characterised in that** at least one of the holding elements (16, 18) has a through-opening (28, 29;. 70, 71) through which the at least one connecting element (24, 54) extends.

8. Transport device (1) according to claim 7 **characterised in that** the at least one connecting element (24, 54) received in the through-opening (28, 29; 70, 71) through form-locking engagement prevents a tilting of the holding element (16, 18) relative to the at least one connecting element (24, 54).

9. Transport device (1) according to one of the preceding claims **characterised in that** the holding elements (16, 18) are arranged on the mutually facing sides of the first (6) and the second slide carriage (8).

10. Transport device (1) according to one of the preceding claims **characterised in that** the holding element (16) of the first slide carriage (6) is rigidly fixed on the at least one connecting element (24, 54) and the at least one connecting element (24, 54) furthermore functions as a guide device on which the holding element (18) of the second slide carriage (8) is mounted for sliding movement.

11. Transport device (1) according to one of claims 1 to 9 **characterised in that** the holding elements (16, 18) of the first (6) and second slide carriage (8) are rigidly fixed on the at least one connecting element (24, 54).

12. Transport device (1) according to claim 10 or 11 **characterised in that** the holding elements (16, 18) of the first (6) and the second slide carriage (8) are detachably fixed on the at least one connecting element (24, 54).

13. Transport device (1) according to one of the preceding claims **characterised in that** the first (6) and second slide carriage (8) are driven actively wherein the control of the drive of the first (6) and second slide carriage (8) is adjusted so that the distance between the holding elements (16, 18) remains constant.

14. Transport device (1) according to one of the preceding claims **characterised in that** the track rail (4) defines a track plane (E) and the holding elements (16, 18) are arranged perpendicular to the track plane (E).

15. Transport device (1) according to one of claims 1 to 13 **characterised in that** the track rail (4) defines a track plane (E) and the holding elements (16, 18) are arranged parallel to the track plane (E).

## Revendications

1. Dispositif de transport (1) servant à transporter des produits (2), comprenant
au moins une paire de chariots (6, 8) pouvant être déplacés, laquelle présente un premier chariot (6) et un second chariot (8) servant à transporter au moins un produit (2),
un rail de roulement (4) disposé en rotation, servant à guider l'au moins une paire de chariots (6, 8) l'un derrière l'autre dans un sens de transport (F) variable,
un dispositif d'entraînement à moteur linéaire (10) servant à entraîner l'au moins une paire de chariots (6, 8), dans lequel au moins le premier chariot (6) présente au moins un aimant permanent (11), qui est en liaison fonctionnelle avec le dispositif d'entraînement à moteur linéaire (10),
dans lequel un élément de maintien (16, 18) est prévu respectivement sur le premier (6) et le second chariot (8) et les éléments de maintien (16, 18) du premier (6) et du second chariot (8) forment entre eux un espace de réception de produit (13) et maintiennent à cet endroit entre eux l'au moins un produit (2),
**caractérisé en ce**
**que** les éléments de maintien (16, 18) sont montés sur le premier (6) et le second chariot (8) respectivement de manière à pouvoir tourner autour d'un axe de rotation (20, 22 ; 50, 52), qui s'étend sensiblement de manière perpendiculaire au sens de transport (F) variable, et
**qu'**au moins un élément de liaison (24, 54) servant à relier les éléments de maintien (16, 18) du premier (6) et du second chariot (8) est prévu de telle manière qu'une orientation relative des éléments de maintien (16, 18) les uns par rapport aux autres est déterminée.

2. Dispositif de transport (1) selon la revendication 1, **caractérisé en ce que** les éléments de maintien (16, 18) sont maintenus les uns par rapport aux autres de manière symétrique par l'au moins un élément de liaison (24, 54).

3. Dispositif de transport (1) selon la revendication 2, **caractérisé en ce que** les éléments de maintien (16, 18) sont maintenus de manière parallèle les uns aux autres par l'au moins un élément de liaison (24, 54).

4. Dispositif de transport (1) selon la revendication 3, **caractérisé en ce que** les éléments de maintien (16, 18) sont disposés de manière perpendiculaire à l'au moins un élément de liaison (24, 54).

5. Dispositif de transport (1) selon l'une quelconque des revendications précédentes, **caractérisé en ce que** le rail de roulement (4) présente au moins un tronçon à sens de transport (F) variable et provoque le transport de l'au moins une paire de chariots (6, 8) le long de l'au moins un tronçon d'un sens de transport (F) variable, **en ce que** les éléments de maintien (16, 18) tournent par rapport au premier (6) et au second chariot (8).

6. Dispositif de transport (1) selon l'une quelconque des revendications précédentes, **caractérisé en ce que** l'au moins un élément de liaison (24, 54) est réalisé sous la forme d'une barre de liaison.

7. Dispositif de transport (1) selon la revendication 6, **caractérisé en ce qu'**au moins un des éléments de maintien (16, 18) présente un orifice de passage (28, 29 ; 70, 71), à travers lequel l'au moins un élément de liaison (24, 54) s'étend.

8. Dispositif de transport (1) selon la revendication 7, **caractérisé en ce que** l'au moins un élément de liaison (24, 54) reçu dans l'ouverture de passage (28, 29 ; 70, 71) empêche, par complémentarité de forme, un basculement de l'élément de maintien (16, 18) par rapport à l'au moins un élément de liaison (24, 54).

9. Dispositif de transport (1) selon l'une quelconque des revendications précédentes, **caractérisé en ce que** les éléments de maintien (16, 18) sont disposés sur les côtés tournés les uns vers les autres du premier (6) et du second chariot (8).

10. Dispositif de transport (1) selon l'une quelconque des revendications précédentes, **caractérisé en ce que** l'élément de maintien (16) du premier chariot (6) est fixé de manière rigide sur l'au moins un élément de liaison (24, 54), et **en ce que** l'au moins un élément de liaison (24, 54) fait par ailleurs office d'un système de guidage, sur lequel l'élément de maintien (18) du second chariot (8) est monté de manière mobile par glissement.

11. Dispositif de transport (1) selon l'une quelconque des revendications 1 à 9, **caractérisé en ce que** les éléments de maintien (16, 18) du premier (6) et du second chariot (8) sont fixés de manière rigide sur l'au moins un élément de liaison (24, 54).

12. Dispositif de transport (1) selon la revendication 10 ou 11, **caractérisé en ce que** les éléments de maintien (16, 18) du premier (6) et du second chariot (8) sont fixés de manière libérable sur l'au moins un élément de liaison (24, 54).

13. Dispositif de transport (1) selon l'une quelconque des revendications précédentes, **caractérisé en ce que** le premier (6) et le second chariot (8) sont entraînés de manière active, dans lequel la commande de l'entraînement du premier (6) et du second chariot (8) est réglée de telle manière que la distance entre les éléments de maintien (16, 18) reste constante.

14. Dispositif de transport (1) selon l'une quelconque des revendications précédentes, **caractérisé en ce que** le rail de roulement (4) définit un plan de rail de roulement (E), et **en ce que** les éléments de maintien (16, 18) sont disposés de manière perpendiculaire au plan de rail de roulement (E).

15. Dispositif de transport (1) selon l'une quelconque des revendications 1 à 13, **caractérisé en ce que** le rail de roulement (4) définit un plan de rail de roulement (E), et **en ce que** les éléments de maintien (16, 18) sont disposés de manière parallèle au plan de rail de roulement (E).
